# EUROPEAN PATENT SPECIFICATION

(11) **EP 1 878 928 B1**
(45) Date of publication and mention of the grant of the patent: **25.08.2010**
(21) Application number: 06460021.6
(22) Date of filing: 12.07.2006
(51) Int. Cl.: F16B 47/00

(54) **Vacuum suction cup assembly, especially for a windshield of a mechanical vehicle**
Saugnapfvorrichtung, insbesondere für die Windschutzscheibe eines Kraftfahrzeugs
Dispositif à ventouse, notamment pour le pare-brise d'un véhicule automobile

(43) Date of publication of application: 16.01.2008
(73) Proprietor: BURY Sp. z o.o., 39-300 Mielec (PL)
(72) Inventor: Bury, Henryk, 39 300 Mielec (PL)
(74) Representative: Kaminski, Zbigniew

(56) References cited:
- EP-A2- 0 096 379
- DE-U1- 9 112 441
- US-B1- 6 666 420

## Description

This invention relates to a vacuum suction cup assembly, especially for a windshield of a mechanical vehicle, comprising a housing, a dome connected to the housing and provided with a guiding bushing, and an elastic suction cup with a spindle protruding axially therefrom. The spindle can slides within the guiding bushing of the dome, which shields the elastic suction cup from outside.

An automotive and other mechanical vehicle equipment market experiences currently tremendous growth in a number of a diverse electronic equipment, e.g. navigation devices, mobile phones, TV screens and others, as supplementary devices installed in mechanical vehicles. Such equipment is commonly attached by various holders and vacuum suction cups onto a windshield of the mechanical vehicle. Thus several new designs of vacuum suction cups have been released recently to the market. They are both to provide reliable connection of a bracket with the windshield, and, on the other hand, they are to be easily fastened and unfastened from the windshield of the vehicle.

European patent EP 1 338 808 describes a vacuum suction cup connected to a holder, composed of elastic concave suction cup, which circumference adheres to a flat and smooth surface, e.g. a glass pane. The suction cup has a threaded pin protruding from its external surface. The suction cup is covered by an intermediate member in the form of a dish or dome, which adjoins the cup around the circumference. The dome has a threaded hole which is fastened to the threaded pin of the suction cup. The dome is provided with protruding axial pin terminated with a flange for suspending an object. Once the suction cup is pressed against the pane surface, where the suction cup is to be fixed, one fastens the dome over the protruding threaded pin, which generates a vacuum between the pane and the suction cup, which in turn fastens the suction cup to the smooth surface of the pane. To unfasten the vacuum suction cup from the pane, one has to tighten the dome more over the threaded pin of the suction cup, which in turn makes it to tear off the flat and smooth pane.

British patent GB 2420147A relates to a vacuum suction cup provided with an elastic suction cup, which once pressed, fastens reliably on a flat and smooth surface, e.g. a pane. There is a pin with a threaded hole, protruding outwards and located in a central thickened area of the suction cup. There is a suction cup covering dome fitted with a threaded spindle pointing downwards, located directly on the suction cup. The threaded spindle in the covering dome fastens to the threaded hole in the pin of the suction cup. To facilitate gripping of the dome at fastening, butterfly type grips are found on the external surface.

Once the suction cup is pressed against a pane, the suction cup flattens and the pin fastening of the dome to the suction cup makes it to rise, which generates under pressure in the zone between the suction cup and the pane, which in turn fastens the suction cup to the pane. The suction cup clings to the pane over entire circumference, so even loads applied eccentrically by an object suspended on the pin do not make it to tear off the flat and smooth surface of the pane. To unfasten the vacuum suction cup, one has to loosen the dome to make the suction cup to adhere to the pane over entire area, and to loosen the suction cup.

German utility model DE 202004010999U1 describes a stand or hanger provided with a vacuum suction cup connected by means of an elastic metal tube with a holder for hanging an object on. The elastic concave suction cup has a threaded pin to fasten a nut to. A dome is attached to the lower surface of the nut. The dome with its circumference rests on the outer surface of the suction cup. The elastic tube on the suction cup side terminates with a clamp, which, as its internal depressions match with the nut sides, makes the nut to turn when turning the elastic tube. When the suction cup is applied to a flat and smooth surface, e.g. a pane, after few turns of the flexible tube the nut causes the pin in the suction cup to go off the flat and smooth surface of the pane, which generates under pressure keeping the suction cup in place. Then a suitable object can be placed on the stand or hanger attached to the suction cup.

European patent EP 1 457 690 discloses a stand or hanger provided with a vacuum suction cup on one side and a handle to suspend an object on the other side. Both parts are connected by a flexible bar covered by a plastic shielding, which allows one to attach an object in any place and position relative to a flat and smooth surface, e.g. a windshield of a mechanical vehicle. The suction cup is provided with a protruding spindle, formed integrally with the flexible bar. The suction cup spindle has a transverse hole, where a pin protrudes from. There is also an axial hole containing a helical spring, which presses the suction cup against the windshield. A pin passes through the transverse hole in the suction cup, through longitudinal holes formed in walls of a suction cup support as well as through an axial hole in a single arm lever. The lever rotates around the pin, while supported on its cam surface by the external surface of the support. As the lever rises, it loads the spring and makes the suction cup to go off the flat and smooth pane surface and generates a vacuum between the suction cup and the pane. The vacuum keeps the suction cup in place firmly.

German utility model DE 202005014289U1 relates to a bracket with a vacuum suction cup for mounting any objects, such as mobile phones, on a flat and smooth surface, e.g. a wall or a pane. The suction cup of the bracket comprises an elastic suction cup, which adheres with its entire circumference to the flat and smooth surface, e.g. a pane, and a round dome covering the suction cup with its entire circumference. The bracket for hanging an object protrudes from the dome, and it is provided with a system of hollow joints, perpendicular to each other, which makes possible to attach any object in any convenient angular position. There is a sliding pin in longitudinal holes on sides of the bracket, which passes through a spindle protruding from the suction cup. There is also a helical spring above the spindle, which pushes the suction cup off the internal surface of the dome. A pin located in the spindle of the suction cup engages with elongated holes in walls of the bracket and with one-arm angular lever. The lever is provided with a cam surface resting on the external surface of the dome. When the lever is in its risen position it releases the helical spring, which presses the suction cup against the flat and smooth surface of the pane or wall. In a depressed position the lever compresses the spring, and, through the pin, makes the spindle of the suction cup to rise and generate vacuum below it and the flat and smooth surface of the pane thus fixing the cup to it.

Placing both the pin and slit in the dome, along which the pin is guided, outside the suction cup is the main inconvenience of both designs, as both parts might be easily broken. Moreover such suction cups are inconvenient in operation as in order to attach it, it is necessary to press the suction cup against the pane with one hand, and at the same time to turn the lever by the other hand.

German utility model DE 9 112 441 describes a vacuum suction cup mounted to a smooth surface, e.g. a pane, which includes an elastic suction cup, pressed along its circumference to the surface by the circumference of the vacuum suction cup. The elastic suction cup is provided with a spindle, protruding from its centre, which has a transverse hole through which a guiding pin is inserted and both ends of the guiding pin touch vertical grooves in the vacuum suction cup body. There is also a rotatable ring located in the vacuum suction cup body. In its circumference the ring is provided with grooves inclined relative to the plane perpendicular to the spindle axis. Both ends of the guiding pin sit in these grooves. The ring is connected with a knob located rotatably in the vacuum suction cup body.

The vacuum suction cup is first pressed against the smooth surface. Then, the knob is rotated together with the ring, which inclined grooves exert force on the guiding pin thus making the guiding spindle and the central part of the suction cup rise, which generates under pressure under the suction cup, which in turn fastens the suction cup to the smooth surface. The suction cup is unfastened by rotating the ring in the opposite direction. These operations, however, require concurrent and well-timed action of both hands.

The American patent No. US 6 666 420 relates to a vacuum suction cup with a body, which adjoins with its entire circumference to the circumference of an elastic suction cup provided with a spindle, which protrudes from its centre. The spindle can move along the hole in the vacuum suction cup body and is provided with pins mating with inclined surfaces of a cylindrical insert, which is also rotatably located in the body. The insert is provided with teeth on its both sides, inclined in relation to the plane perpendicular to the spindle axis. Rotating the insert enables rising or lowering the spindle connected to the centre part of the suction cup.

Once the elastic suction cup is pressed against the smooth surface, the insert is rotated thus making the guiding spindle and the centre part of the suction cup rise, which generates under pressure under the suction cup. The suction cup is unfastened by rotating the ring in the opposite direction and thus pressing the suction cup towards the background surface.

The inconvenient feature of this design is that it requires pressing it with one hand against a smooth surface and, concurrently, rotating the insert with the other hand so that both hands are involved.

The European patent no. EP 0 096 379 discloses a vacuum suction cup used for fastening, e.g. flowers or other low-weight decorative elements to a smooth surface. The vacuum suction cup is provided with an elastic rubber vacuum cup connected in its centre part with a spindle protruding therefrom. The rubber suction cup, pressed down by the circumference of the vacuum suction cup body, adjoins, in its entire circumference, to a smooth surface, while the spindle protruding therefrom slides within a bushing, which is an internal part of the vacuum suction cup body. The spindle and the bushing are also provided with vertical grooves, into which two slidable strips, adhering to each other, are inserted parallel to the background surface. Upper surfaces of the strips are inclined in relation to the direction of their move and ended with bumpers, while the strips are provided, at their ends, with disk handles. Pulling both handles at the same time results in rising the spindle and the centre part of the suction cup and, as a consequence of the under pressure created under the suction cup, firm fastening the suction cup to a smooth surface. However, both fastening and unfastening the vacuum suction cup from the background requires concurrent and well-timed action of only one hand.

It is an objective of the invention to provide a suction cup assembly, especially for windshields of mechanical vehicles, where a mechanism displacing a spindle of the suction cup assembly would be entirely enclosed by the suction cup housing, and where only one hand is required for attaching it.

According to the invention there is provided a vacuum suction cup assembly, especially for a windshield of a mechanical vehicle, which is characterised in that the housing of the suction cup assembly is further provided with a push-button, which can slide perpendicularly to the axis of the guiding spindle, and is provided, on its both side walls, with guiding grooves inclined relative to the direction into which the push-button can slide. Both ends of a guiding pin, which protrude from a transverse hole of the guiding spindle into which the guiding pin has been forced, can slide along the guiding grooves. The push-button protrudes from one side of the housing in a released position of the suction cup assembly and protrudes from the opposite side of the housing in a fastened position of the suction cup assembly.

Desirably, the guiding grooves formed on the side walls of the push-button are in their lower portion, which is situated closer to the dome, inclined in relation to a push-button axis at an angle ranging from 10° to 30°, while in their upper portion, which is situated farther from the dome, as parallel to that axis.

Advantageously, the dome fastening the circumference of the elastic suction cup is connected to the guiding bushing, within which the guiding spindle of the elastic suction cup can slide.

Thanks to these features the vacuum suction cup assembly, especially for a windshield of a mechanical vehicle, according to the invention, is a compact design where all mating movable elements are located within a shielding. The vacuum suction cup assembly can be easily fastened to a windshield by a single hand. The fastening is done by pressing the suction cup assembly against the windshield and, at the same time, by pressing the push-button by the thumb of this hand. The suction cup assembly can be also easily unfastened from the windshield by a single hand.

The vacuum suction cup assembly, especially for a windshield of a mechanical vehicle, according to the invention, is depicted in the picture as one of possible designs, where:
**Fig. 1** is a perspective view of the suction cup assembly, according to the invention, in the as-pressed state;
**Fig. 2** is a perspective view of the suction cup assembly in the as-fastened state;
**Fig. 3** is a cross-sectional view of the suction cup assembly in the as-pressed state;
**Fig. 4** is a cross-sectional view of the suction cup assembly of Fig. 3 in the as-fastened state;
**Fig. 5** is an exploded view of the suction cup assembly;

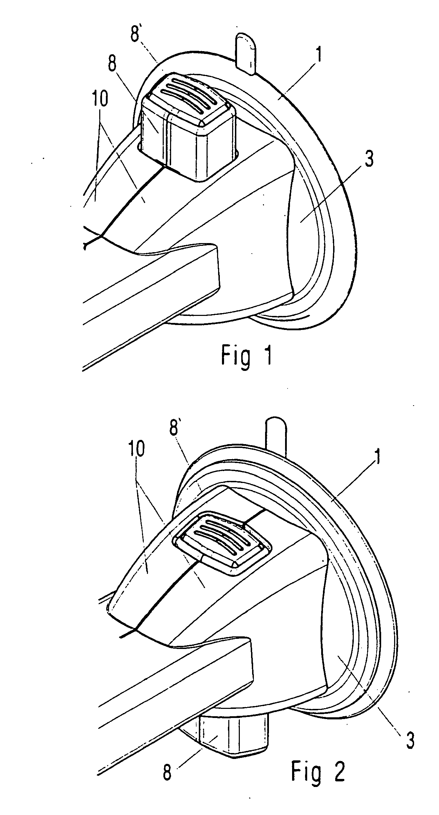

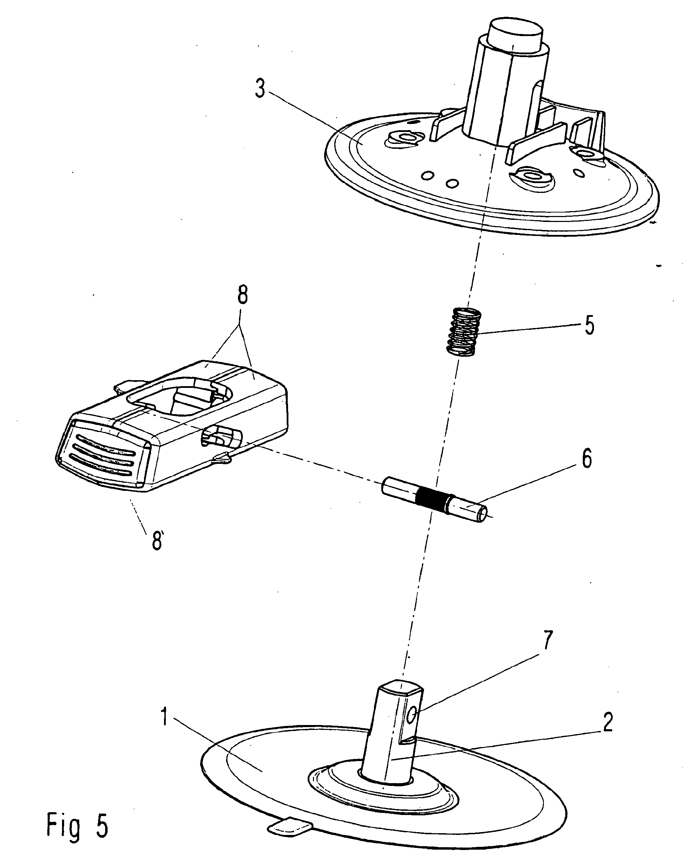

A push-button type suction cup assembly as shown in Figs. 1 to 5 comprises the following basic elements: an elastic suction cup **1,** integrally connected with a guiding spindle **2,** a dome **3,** provided with a guiding bushing **4** protruding from its external surface and guiding the spindle **2,** a return spring **5** located within the guiding bushing **4,** a guiding pin **6,** forced into a transverse hole **7** of the guiding spindle **2,** and a push-button **8** with guiding grooves **9** on its both side walls **8'** and sliding within a housing **10** of the suction cup. The housing **10** is preferably connected with a joint provided with a mounting arm (not shown). The joint is used for suspending various electronic equipment (e.g. mobile phones, TV sets, navigation equipment, meteo equipment etc.), attached to a windshield of a mechanical vehicle.

The guiding pin **6,** forced into the transverse hole **7** of the guiding spindle **2** of the suction cup **1,** is mounted in guiding grooves **9** of the push-button **8** on its both sides. Guiding grooves **9** are inclined in relation to the push-button axis at the angle α ranging from 10° to 30°, and terminate in its upper portion as parallel to that axis. Thus pressing the push-button **8** at the initial phase of its movement, as a result of an impact of the side surfaces of the guiding grooves **9** on the spindle **2,** makes the guiding spindle **2** together with the elastic suction cup 1 move outwards the pane and concurrently the spring **5** is pressed, while at the final phase, the guiding spindle **2** with the elastic suction cup 1 are set distant from the pane, which makes the suction cup assembly to fasten.

The push-button type suction cup assembly as shown in Figs. 1 to 5 operates as follows.

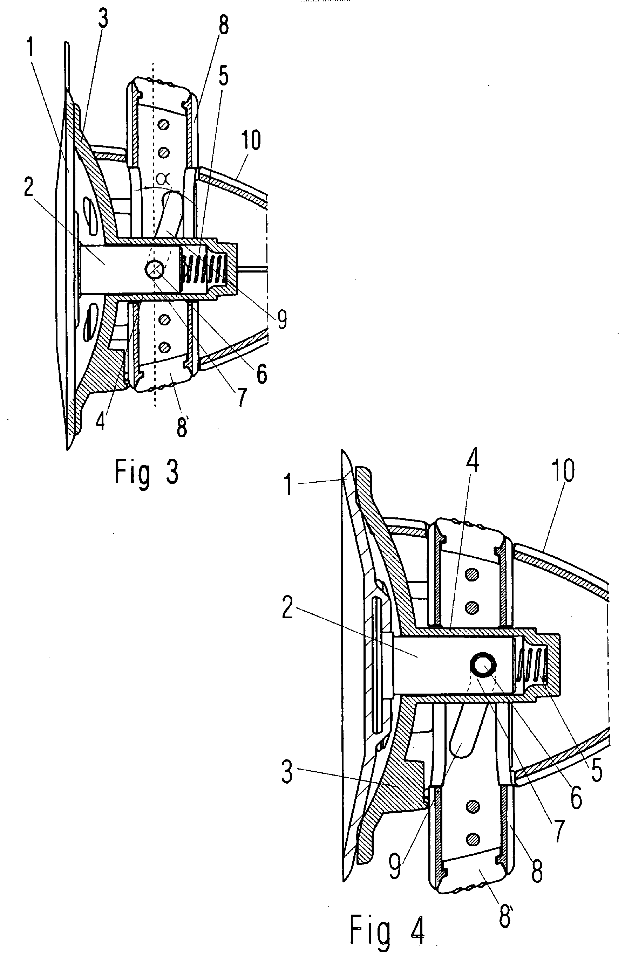

While holding the suction cup assembly by a hand, when its push-button **8** is set as shown in Figs. 1 and 3, the elastic suction cup 1 is first pressed against the windshield of the mechanical vehicle and then, at such setting state, the push-button **8** is pressed down by the same hand. In its initial phase, the vertical movement of the push-button **8,** corresponding to the inclined portion of guiding grooves **9,** makes the guiding pin **6** guided by grooves as well as the spindle **2** connected to it, including the elastic suction cup **1,** to move outwards the windshield, creating vacuum under the suction cup assembly and fastening it. In the as-fastened position (see Figs. 2 and 4), the guiding pin **6** is in the portion of the guiding groove **9** parallel to the windshield, which keeps the suction cup assembly in the as-fastened position.

The suction cup assembly is unfastened by holding it with one hand, and by pushing up the push-button **8** with the thumb simultaneously. Due to the action of the return spring **5** and the elastic action of the elastic suction cup **1,** the push-button **8** is automatically set into up position and simultaneously the spindle **2** with the elastic suction cup **1** are set into a released position.

The invention is not limited to the embodiments disclosed in the drawing. Within the scope of the invention different design modifications will be conceivable to those skilled in the art, provided that these modifications are consistent with the idea of this invention as defined in the claims.

## Claims

1. A vacuum suction cup assembly, especially for a windshield of a mechanical vehicle, comprising a housing (10), a dome (3) connected to the housing and provided with a guiding bushing (4), and an elastic suction cup provided with a guiding spindle (2) protruding axially therefrom, wherein the guiding spindle can slide within the guiding bushing of the dome, which dome shields the elastic suction cup from outside, **characterized in that** the housing **(10)** of the suction cup assembly is further provided with a push-button **(8),** which can slide perpendicularly to the axis of the guiding spindle **(2)** and is provided, on its both side walls **(8'),** with guiding grooves **(9),** inclined relative to the direction into which the push-button **(8)** can slides, and along which both ends of a guiding pin **(6),** which protrude from a transverse hole **(7)** of the guiding spindle **(2)** into which the guiding pin **(6)** has been forced, can slide; wherein the push-button **(8)** protrudes from one side of the housing **(10)** in a released position of the suction cup assembly and protrudes from the opposite side of the housing **(10)** in a fastened position of the suction cup assembly.

2. The suction cup assembly according to claim 1, **characterized in that** the guiding grooves **(9)** formed on the side walls of the push-button **(8)** are in their lower portion, which is situated closer to the dome **(3),** inclined in relation to a push button **(8)** axis at an angle (α) ranging from 10° to 30°, and terminate in their upper portion, which is situated farther from the dome (3), as parallel to that axis.

3. The suction cup assembly according to claim 1, **characterized in that** the dome **(3)**
which in use of the assembly presses the circumference of the elastic suction cup **(1)** against the surface onto which the assembly is fastened is connected to the guiding bushing **(4),** within which the guiding spindle **(2)** of the elastic suction cup **(1)** can slide.

## Patentansprüche

1. Eine Vakuumsaugnäpfchenanlage, insbesondere für Kraftfahrzeugsglasscheiben, umfassend eine ans Gehäuse befestigte Kalotte, welche Kalotte mit einer Führungsbuchse und einer elastischen Saugscheibe und einem aus dieser Saugscheibe axial herausragenden Bolzen ausgestattet ist, wobei der Bolzen in der Führungsbuchse der Kalotte, die die elastische Saugscheibe von außen schirmt, verschiebbar ist, **gekennzeichnet dadurch, daß** das Gehäuse **(10)** der Vakuumsaugnäpfchenanlage zusätzlich mit einem Druckknopf **(8)** ausgestattet ist, welcher Druckknopf mit zwei Seitenwände **(8')** ausgestattet und in der zur Achse des Führungsbolzens **(2)** senkrechten Richtung verschiebbar ist, wobei das Gehäuse mit Führungsrillen **(9)** ausgestattet ist, welche Rillen relativ zu der Richtung, in welcher der Druckknopf **(8)** verschiebbar ist, geneigt sind und in welchen Rillen die beiden Enden des Führungszapfens **(6)** verschiebbar gelagert sind, welcher Zapfen aus einem Querloch **(7)** des Führungsbolzens **(2),** in dem der verschiebbare Führungszapfen **(6)** verkeilt ist, herausragt, wobei der Druckknopf **(8)** in der entsperrten Lage der Vakuumsaugnäpfchenanlage aus einer Seite des Gehäuses **(10)** und in der verkeilten Lage der Vakuumsaugnäpfchenanlage aus der anderen entgegengesetzten Seite des Gehäuses **(10)** herausragt.

2. Die Vakuumsaugnäpfchenanlage laut dem Anspruch 1 **gekennzeichnet dadurch, dass** die Führungsrillen **(9)** an den Seitenwände des Druckknopfes in ihrem unteren Teil, welches in der Nähe der Kalotte **(3)** sich befindet, im innerhalb der Grenzen von 10° bis 30° enthaltenen Winkel (α) zur Achse des Druckknopfes **(8)** geneigt dagegen zu dieser Achse im oberen weiter von der Kalotte **(3)** befindlichen Teil parallel sind.

3. Die Vakuumsaugnäpfchenanlage laut dem Anspruch 1 **gekennzeichnet dadurch, dass** die ein elastisches Rand der Saugscheibe **(1)** zuzudrückende Kalotte **(3)** mit der Führungsbuchse **(4),** in welcher der Bolzen **(2)** der elastischen Saugscheibe **(1)** sich verschieben kann, verbunden ist.

## Revendications

1. Jeu d'une ventouse à vide, surtout pour les vitres des véhicules mécaniques, comprenant un boîtier, une calotte jointe au boîtier, équipée d'une duille de guidage, un plateau élastique aspirateur et un mandrin en saillant d'une manière axiale qui peut se décaler dans une duille de guidage d'une calotte qui couvre de l'extérieur ce plateau élastique; **caractérisé par le fait que** le boîtier (10) du jeu de la ventouse à vide est équipé aussi d'un bouton (8) qui peut se décaler perpendiculairement à un axe du mandrin guidant (2) et il est équipé, sur les deux surfaces intérieures des joues des éléments traversiers (8') et le boîtier est équipé des rainures de guidage (9), inclinées relativement à une direction dans laquelle le bouton (8) peut se décaler et dans lesquelles sont placés d'une manière glissante les extrémités d'un pivot de guidage (6) qui saillit d'un trou transversal (7) du mandrin guidant (2) dans lequel a été calé le pivot glissant de guidage (6) et le bouton (8) saillit d'un côté du boîtier (10) dans une position débloquée du jeu de la ventouse à vide et il saillit d'un côté adverse du boîtier (10), dans une position calée du jeu de la ventouse à vide.

2. Le jeu de la ventouse, selon une revendication 1, **caractérisé par le fait que** des rainures de guidage (9) sur les joues du bouton sont inclinées, dans leur partie inférieure, près de la calotte (3), sous un angle (α) compris dans les limites de 10° à 30° en rapport à un axe du bouton (8) et parallèlement à un axe d'une partie supérieure, plus loin de la calotte (3).

3. Le jeu de la ventouse, selon une revendication 1, **caractérisé par le fait que** la calotte (3) serrant un bord élastique du plateau aspirateur (1) est jointe avec la duille de guidage (4) dans laquelle peut se décaler le mandrin (2) du plateau élastique aspirateur (1).
